# EUROPEAN PATENT APPLICATION

(11) **EP 2 732 989 A1**
(43) Date of publication of application: **21.05.2014**
(21) Application number: 13192626.3
(22) Date of filing: 13.11.2013
(51) Int. Cl.: B60C 23/12

(54) **Pneumatic tire**

(30) Priority: 15.11.2012 US 201213677411
(71) Applicant: The Goodyear Tire & Rubber Company, Akron, Ohio 44316 (US)
(72) Inventor: Hinque, Daniel Paul Luc Marie, B-6720 Habay-la-Neuve (BE); Bonnet, Gilles, L-9176 Niederfeulen (LU); Di Prizio, Olivier, F-57330 Hettange-Grande (FR); Cuny, Andre, B-6720 Habay-la-Neuve (BE); Lembert, Sebastien, F-54260 Villers Le Rond (FR); Frantzen, Andreas, D-54292 Trier (DE)
(74) Representative: Kutsch, Bernd

(57) **Abstract**

A pneumatic tire having a toroidal tire cavity (20) for containing pressurized air and an elongate integral air passageway (238) contained within a flexible tire component is disclosed. The air passageway (238) extends between an air inlet cavity (132) and an air outlet cavity (134) in the flexible tire component and also for at least a partial circumferential path around the tire (12). The tire (12) further comprises a metallic connector assembly (136) within the air outlet cavity (134), the connector assembly (136) including a through-channel for conducting air flow communication between the air passageway (238) within the flexible tire component and a chamber of the metallic connector assembly (136).

## Description

### Field of the Invention

The present invention relates generally to a pneumatic tire and preferably to an air maintenance tire. More specifically, the invention relates to a connector system for integration into a tire, which may be used for constructing an air maintenance pump assembly integrated into the tire.

### Background of the Present Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependant upon the driver taking remedial action when warned to re-inflate a tire to recommended pressure. It is a desirable, therefore, to incorporate an air maintenance feature within a tire that will re-inflate the tire in order to compensate for normal air diffusion over time without the need for driver intervention.

### Summary of the Invention

The invention relates to a pneumatic tire in accordance with claim 1.

Dependent claims refer to preferred embodiments of the invention.

A tire in accordance with a preferred aspect of the present invention includes a toroidal tire cavity for containing pressurized air, an elongate integral air passageway contained within a flexible tire component, the air passageway extending between an air inlet cavity and an air outlet cavity in the flexible tire component, the air passageway extending for at least a partial circumferential path around the tire, and a metallic connector assembly within outlet cavity, the connector assembly including a through-channel for conducting air flow communication between the air passageway within the flexible tire component and a chamber of the connector assembly.

According to another preferred aspect of the tire, the flexible tire component comprises a chafer component of the tire.

According to still another preferred aspect of the tire, the connector assembly includes a valve device for regulating a flow of air from the air inlet cavity to the tire cavity.

According to yet another preferred aspect of the tire, an elongate core strip is positioned within the air passageway of the tire flexible component. The through-channel of the connector assembly has a cross-sectional configuration to receive a free end of the core strip therethrough.

According to still another preferred aspect of the tire, the through-channel comprises a through-slit.

According to yet another preferred aspect of the tire, a metallic inlet connector assembly within the air inlet cavity includes an air inlet device for conducting air external to the tire into the air inlet cavity and a metallic outlet connector assembly within the air outlet cavity includes a valve device for regulating a flow of air from the air outlet cavity to the tire cavity.

According to still another preferred aspect of the tire, the flexible tire component comprises a chafer component of the tire.

According to yet another preferred aspect of the tire, a removable elongate core strip is positioned within the air passageway of the flexible tire component during a pre-cure build of the tire and withdrawn from the air passageway of a post-cure tire. A through-channel of both the inlet connector assembly and the outlet connector assembly each has a cross-sectional configuration to receive a respective free end of the core strip therethrough.

According to still another preferred aspect of the tire, each through-channel comprises a through-slit.

According to yet another preferred aspect of the tire, the metallic connector assembly is constructed of steel, titanium, aluminum, stainless steel, stainless steel and aluminum, stainless steel and titanium, aluminum and titanium, or stainless steel, titanium, and aluminum.

### Definitions

"Axial" and "axially" means lines or directions that are parallel to the axis of rotation of the tire.

"Chafer" is a narrow strip of material placed around the outside of a tire bead to protect the cord plies from wearing and cutting against the rim and distribute the flexing above the rim.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Footprint" means the contact patch or area of contact of the tire tread with a flat surface at zero speed and under normal load and pressure.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
Figure 1 schematically shows a perspective front view of an example cured tire with an inlet, an outlet, and a channel for a 180 degree system in accordance with the present invention.
Figure 2 schematically shows a side view of the example tire of Figure 1.
Figure 3A schematically shows a sectional view taken along line 3A-3A in Figure 2 and schematically showing the inlet connector.
Figure 3B schematically shows an enlarged sectional view of the inlet connector of Figure 3A.
Figure 4A schematically shows a sectional view taken along line 4A-4A in Figure 2 and schematically showing the outlet connector.
Figure 4B schematically shows an enlarged sectional view of the outlet connector of Figure 4A.
Figure 5A schematically shows a bottom perspective view of an outlet connector in accordance with the present invention.
Figure 5B schematically shows a top perspective view of the outlet connector of Figure 5A.
Figure 5C schematically shows a top orthogonal view of the outlet connector of Figure 5A.
Figure 5D schematically shows a sectional view of the outlet connector taken along line 5D-5D in Figure 5C.
Figure 6A schematically shows a perspective view of screw punch for use with the present invention.
Figure 6B schematically shows a sectional view taken along line 6B-6B in Figure 6A.
Figure 7A schematically shows a front perspective view of a plug in accordance with the present invention.
Figure 7B schematically shows a rear perspective view of the plug of Figure 7A.
Figure 7C schematically shows a sectional view taken along line 7C-7C in Figure 7B.
Figure 8A schematically shows a top perspective view of an inlet connector in accordance with the present invention.
Figure 8B schematically shows a top exploded perspective view of the inlet connector of Figure 8A.
Figure 8C schematically shows a bottom exploded perspective view of the inlet connector of Figure 8A.
Figure 9 schematically shows a perspective view of a basic chafer strip extruder and conveyor for use with the present invention.
Figure 10 schematically shows a detail view of the chafer strip die.
Figure 11 schematically shows a sectional view of an example silicone core in accordance with the present invention.
Figure 12 schematically shows a sectional view of an example extruded chafer strip in accordance with the present invention.
Figure 13A schematically shows a detailed view of an example silicone core strip and an example soft rubber gum strip.
Figure 13B schematically shows a detailed view of the example silicone core strip with a partially folded over soft rubber gun strip.
Figure 13C schematically shows a detailed view of the example silicone core strip with a soft rubber gum strip folded about it.
Figure 14 schematically shows an example chafer strip with holes at locations for the inlet and outlet connectors.
Figure 15 schematically shows an enlarged perspective view of the silicone core strip of Figure 13C being assembled into the chafer strip of Figure 14.
Figure 16A schematically shows a sectional view of the coated silicone core strip of Figure 13C being inserted into the chafer strip of Figure 14.
Figure 16B schematically shows a sectional view of the coated silicone core strip of Figure 13C fully inserted into the chafer strip of Figure 14.
Figure 16C schematically shows a sectional view of the coated silicone core strip of Figure 13C fully inserted into, and enclosed within, the chafer strip of Figure 14.
Figure 17A schematically shows a perspective view of tire build drum with an assembled 180 degree core/chafer strip and a conventional chafer strip being applied.
Figure 17B schematically shows a perspective view of a tire build drum with a conventional 180 degree chafer strip being applied to abut the 180 degree core/chafer strip.
Figure 18 schematically shows a perspective front view of a formed green with inlet and outlet connectors as well as two extending ends of an inserted silicone core strip.
Figure 19A schematically shows an enlarged perspective view of a bottom half member of the inlet connector being inserted into a cavity in a sidewall of the green tire under the silicone core strip.
Figure 19B schematically shows an enlarged perspective view of the bottom half member of Figure 19A positioned within the cavity.
Figure 19C schematically shows an enlarged perspective view of a top half member of the inlet connector being inserted into the cavity in the sidewall of the green tire over the silicone core strip.
Figure 19D schematically shows an enlarged perspective view of the inlet connector fully inserted in the cavity in the sidewall of the green tire over the silicone core strip.
Figure 19E schematically shows an enlarged perspective view of the inlet connector fully inserted into the cavity in the sidewall of the green tire over the silicone core strip with two rubber strips placed over the cavity prior to curing.
Figure 20A schematically shows an enlarged perspective view of a screw punch and outlet connector being forced through the sidewall into the cavity with the silicone core strip inserted into the sidewall and the outlet connector.
Figure 20B schematically shows an enlarged perspective view of the inner side of the sidewall with the screw punch and outlet connector fully penetrating the sidewall.
Figure 20C schematically shows an enlarged perspective view of the inner side of the sidewall with the screw punch removed from the outlet connector and the plug ready to be attached to the outlet connector.
Figure 20D schematically shows an enlarged perspective view of the inner side of the sidewall with the plug attached to the outlet connector.
Figure 20E schematically shows an enlarged perspective view of the outer side of the sidewall with a rubber cap for closing the outlet opening in the outer sidewall.
Figure 21 schematically shows the silicone core strip being removed after curing.

### Detailed Description of Examples of the Present Invention

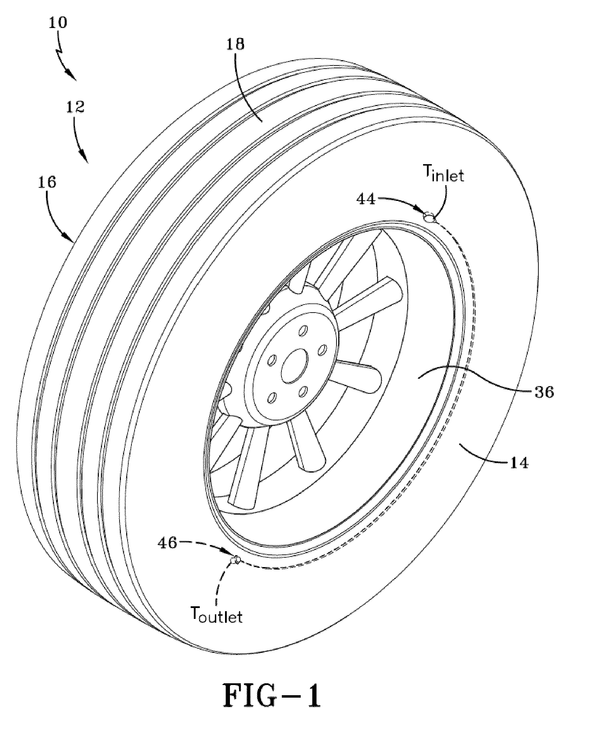

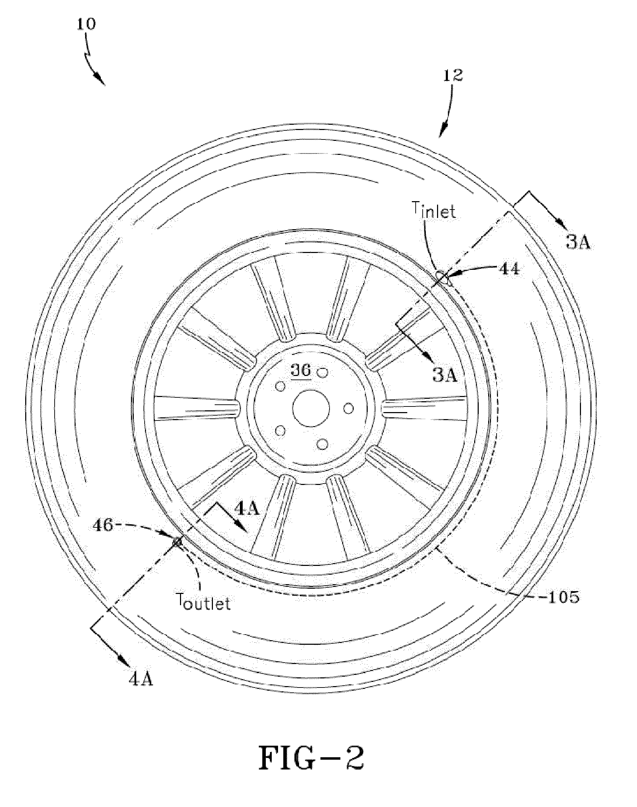

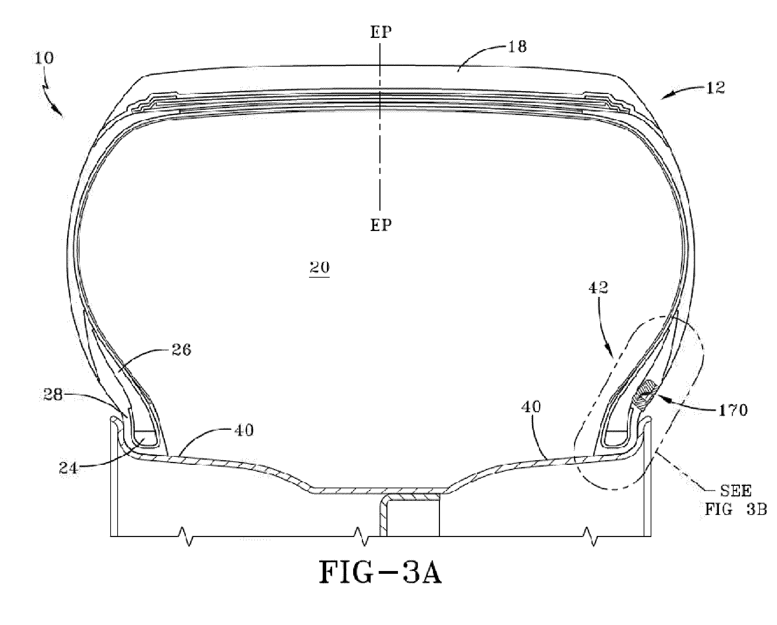

Referring initially to FIGS. 1, 2, 3A, and 3B, an example tire 10 having an air maintenance function is shown. The tire 10 incorporates an air maintenance apparatus for the purpose of maintaining air pressure within the tire at a desired level without operator intervention. The tire 10 is a pneumatic tire 12 having a pair of sidewall components 14, 16 and a tread 18 enclosing a tire cavity 20. The sidewalls 14, 16 extend from a pair of inextensible tire beads 22, 24 to the tread 18. Preferably, each sidewall 14, 16 has an apex component 26 disposed radially adjacent each bead 22, 24 and a chafer component 28 surrounding each bead. The example tire 12 mounts to a wheel 36 and can be seated on a rim surface 40. In the example shown, an air maintenance assembly 42 is provided within one (FIG. 3A) or both (not shown) sidewalls 14, 16 of the tire 12. The air maintenance assembly 42 is configured to extend between an air entry or inlet cavity 44 and an air exit or outlet cavity 46 within the sidewall 14, 16.

In accordance with the present invention, the air maintenance assembly 42 incorporates a thin hollow tube or passageway within a flexible tire component, such as the chafer 28, during tire construction. The location selected for the hollow tube or passageway within the tire 12 may be within a tire component residing within a high flex region of the tire, sufficient to progressively collapse the peristaltic internal hollow tube or passageway as the tire rotates under load thereby conveying air along the hollow tube or passageway from the inlet cavity 44 to the outlet cavity 46 and the tire cavity 20. This AMT (Air Maintenance Tire) assembly 42 may thus function as an internal peristaltic air pump for the tire 12.

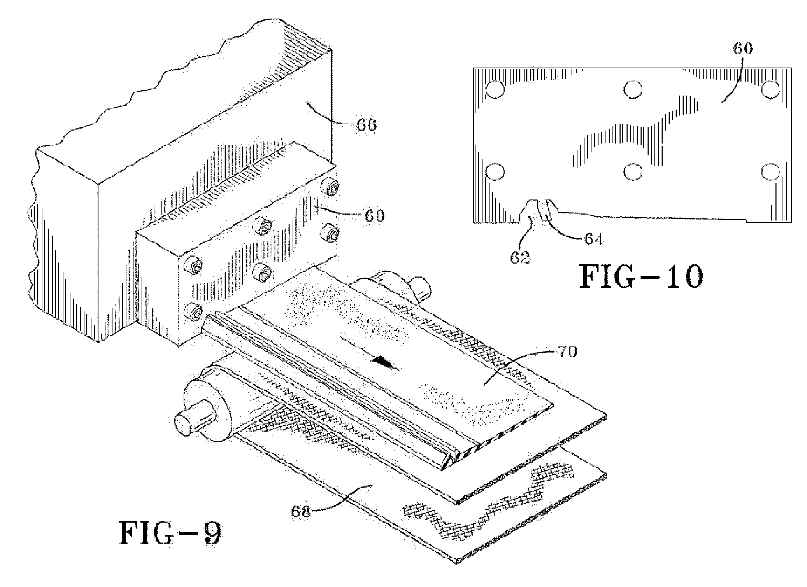

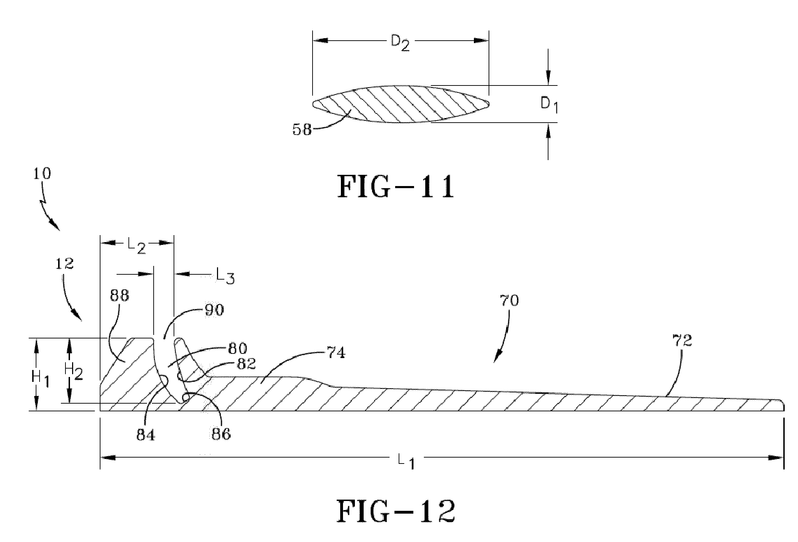

With reference to FIGS. 9 -12, a silicone core strip 58 may be formed by means of die having a profiled orifice therethrough (not shown). The orifice may be elongate and generally lens shaped in section with the extruded strip 58 of like sectional geometry (FIG. 11). The lens shape may have a dimension of, by way of example, 2.7 mm width D₂ x 0.5 mm thickness D₁. While the example composition of the strip 58 may be silicone, other materials such as cable or monofilament may be used. The die may be affixed to a basic extruder of conventional configuration and may deposit a formed core strip 58 on a conveyer belt moved by drive roller. The length of the strip 58 may be predetermined.

As shown in FIGS. 9 and 10, a chafer strip 70 may be formed by an extrusion die 60 affixed to an extruder 66 and deposited on roller 68. The die 60 may form a chafer forming opening 62 along a bottom side and a downward projection finger 64 projecting into the opening 62. FIG. 12 shows a sectional view of the extruded chafer strip 70. The chafer strip 70 widens in section from a low width or thinner end region 72 to a stepped wider or thicker region 74 to a wider or thicker opposite region 88. The die finger 64 may form an incut, arching chafer channel or tube 80 extending the length of the chafer strip 70 and defined by channel sidewalls 82, 84 and bottom wall 86. The channel may be open-ended initially, as shown at 90. Example dimensions, as seen in FIG. 12, may be within a range of L₁ = 25 mm to 100 mm; L₂ = 2 mm to 5 mm; L₃ = 0.5 mm to 1.5 mm; H₁ = 4 mm to 6 mm; and H₂ = 3.5 mm to 5.5 mm. However, the chafer strip dimensions L₁, L₂, L₃, H₁, H₂ may be varied to suit specific tire sizing needs and tire construction characteristics. Alternatively, the silicone strip 58 may also be molded instead of extruded.

A flexible tire component, as shown in FIG. 12, such as a chafer segment, may have a groove 80 defined by groove lips 82, 84 that angle inwardly from top to bottom to a bottom groove wall 86. The groove 80, formed within an axially outward thicker side 88 of the chafer strip 80, may open at the groove opening 90. The groove 80 may be formed within the chafer strip 80 as a result of angles extending axially outward from the opening 90 to the bottom wall 86 at an acute angle θ, which may be within a range of -20 degrees to +20 degrees.

As shown in FIGS. 12A - 12C, the silicone strip 58 may be enveloped within an outer sheath or covering 92 formed of rubber gum or other suitable material. The rubber gum sheath 92 may be folded over the silicone strip 58 to form an overlap seam 94 to enclose the silicone strip and thus form therewith a sheathed silicone strip assembly 104. The strip assembly 104 may be used to form peristaltic tube or channel within a green tire during green tire assembly construction. The strip assembly 104 forms within a green tire component, such as chafer 28, a core air passageway which, once the silicone strip is removed, integrally forms a peristaltic tube/channel within and enclosed by that tire component. The angled groove 80 may be formed within the chafer strip 70 as a slot, with the lips 82, 84 in a close opposed relationship.

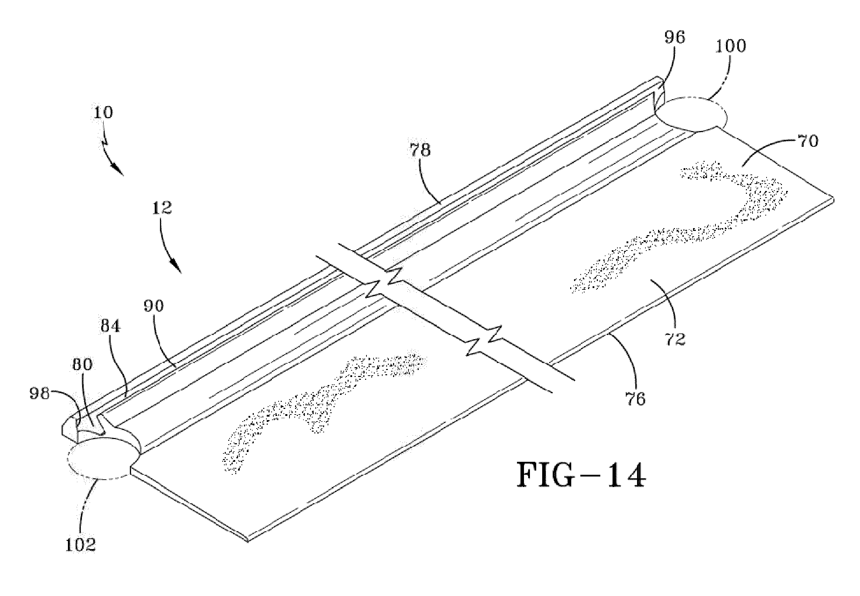

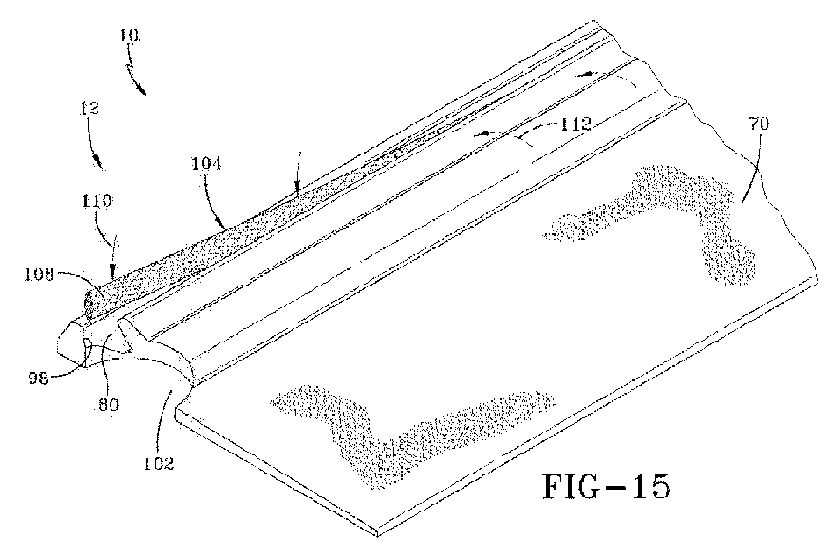

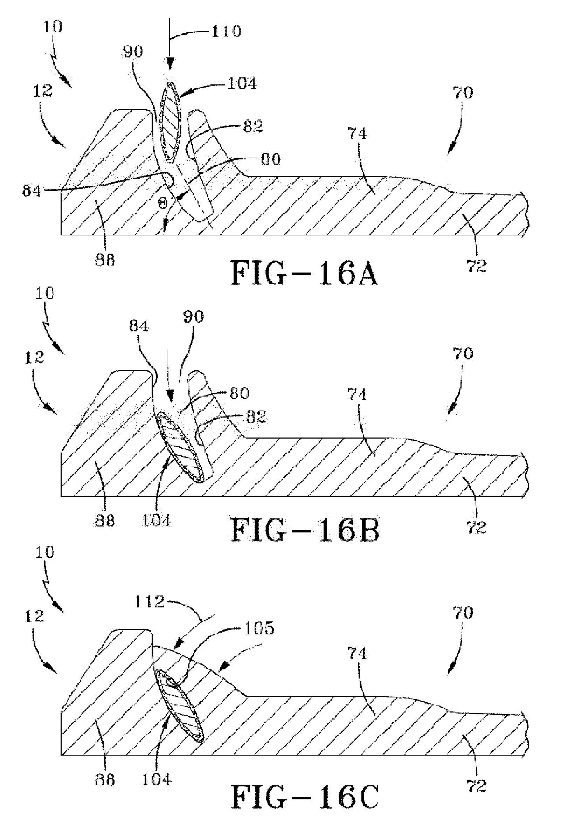

The groove 80 may be opened to receive the strip assembly 104 by an elastic spreading apart of groove lips 82, 84. Thereafter, the assembly 104 may be inserted downward into the groove 80 until reaching a position adjacent to the bottom wall 86. A release of the lips 82, 84 allows the lips to elastically resume their close opposed relationship. The lips 82, 84 may be then stitched together in a rolling operation wherein a roller (not shown) may press the lips 82, 84 into the closed relationship shown in FIGS. 14, 15, and 16A - 16C thereby sealing within the chafer strip 28 by folding the chafer strip 70 over the top, as shown in FIG. 16C. The angle θ of the channel 80 with respect to a bottom surface of the chafer strip 70 may completely enclose the silicone strip assembly 104 within the tire component (e. g. the chafer 28) thereby entirely surrounding the silicone strip assembly with the chafer strip material.

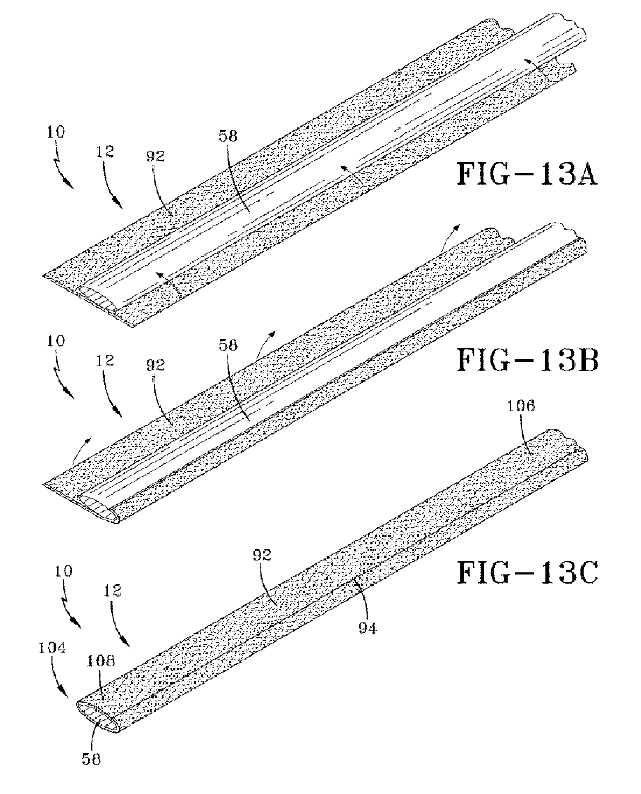

With reference to FIGS. 13 - 16C, the channel 80 defines the channel of a peristaltic pump assembly within a tire chafer 28 and generally extends from a chafer strip end 96 to the other chafer strip end 98. The uncured/green chafer strip 70 may be cut at a given length depending on the pump length that is desired for the cured tire 12. .Formed within each end 86, 98 of the chafer 70 by a punching operation or cutting operation may be enlarged diameter circular holes 100, 102. The holes 100, 102 may be adjacent the ends of the channel 80 and are sized to accommodate receipt of a peristaltic pump inlet device and a peristaltic outlet device. The lips 82, 84 of the chafer channel 80 may be pulled apart. The wrapped silicone strip assembly 104 may be inserted at direction arrow 110 into the channel 80 as shown in FIGS. 16A - 16C until the assembly is adjacent and in contact with the lower wall 86 of the channel 80 (FIG. 16B). Thereupon, the silicone strip assembly 104 may be enclosed by the chafer strip 70 by a folding over of the chafer lip flap 82 in direction 112 (FIG. 16C).

The channel 80 may thus be closed and subsequently stitched in the closed position (FIG. 16C) by a pair of pressure contact rolls (not shown). So enclosed, the silicone strip assembly 104 preserves/maintains the geometry of the channel 80 from a green tire build until after a tire cure, when the assembly is subsequently removed. The silicone strip assembly 104 is dimensioned such that assembly ends 106, 108 extends free from the uncured chafer strip 70 and the channel 80, and further extends a distance beyond the punched holes 100, 102 at opposite ends 106, 108 of the chafer strip.

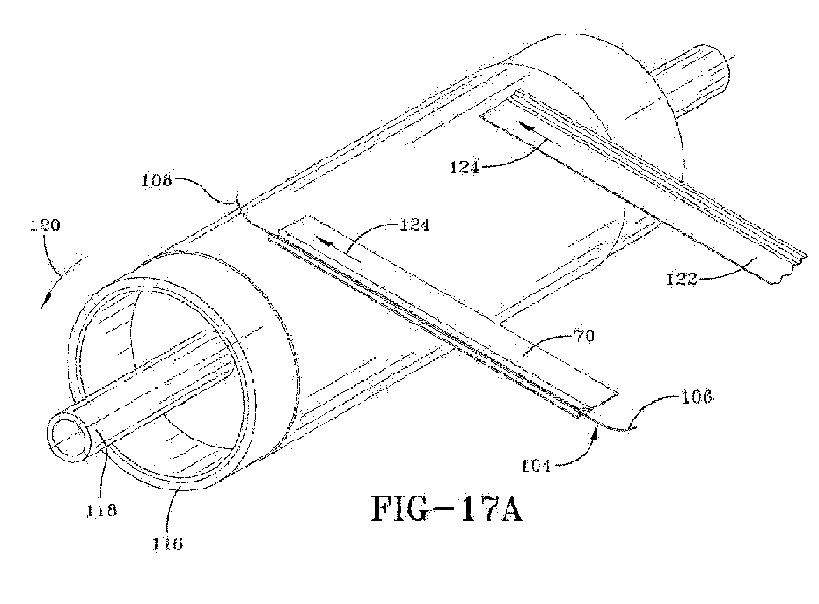

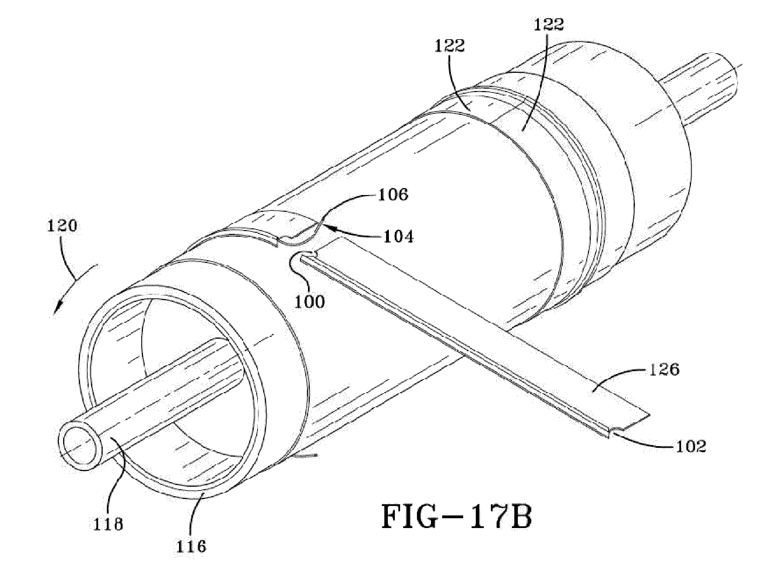

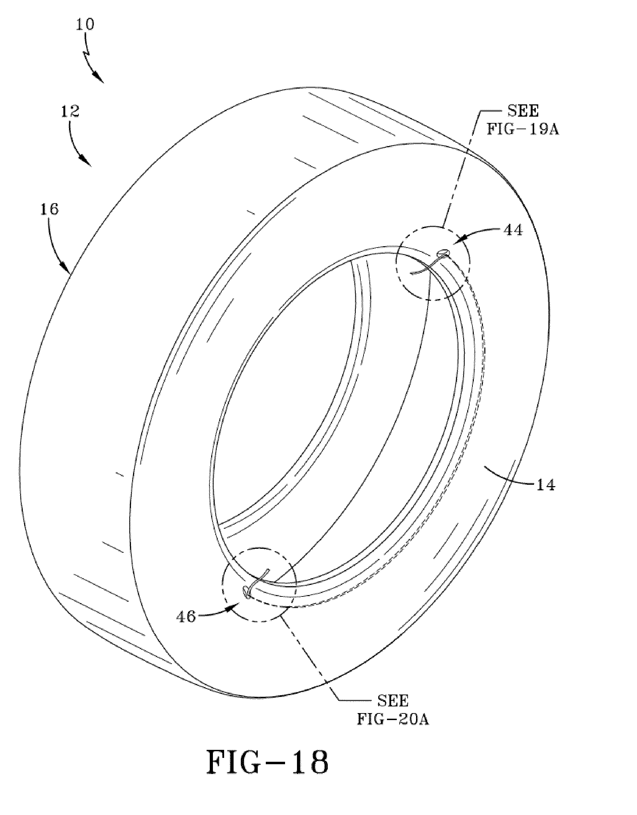

Referring to FIGS. 17A, 17B & 18, a green tire building station is depicted to include a build drum 116 rotatable about an axial support 118. The chafer strip 70 containing the silicone strip assembly 104 and an opposite chafer strip 122, that may (not shown) or may not (shown in FIGS. 17A & 17B) incorporate a strip assembly, may be positioned along opposite sides of the build drum 116 in a direction 124 for an initial 180 degree chafer build. The chafer strip 70 may thus combined with a normal chafer strip 126 to complete the 360 degree circumference. The normal chafer strip 126 may thus be applied to the build drum 116 in axial alignment with and the abutting the chafer strip 70 to complete a 360 degree chafer construction on the build drum.

The opposite side of the build drum 116 receives two 180 degree normal strips 122 in abutment to complete the chafer build on that side of the build drum. It will be noted that the chafer strip 70 may contain the silicone strip assembly 104 while the abutting strip 126 does not. However, if desired, both of the chafer strips 70, 126 as well as one or both of the strips 122 may be configured to contain a silicone strip assembly 104 to create a 360 degree peristaltic pump tube on one side or both sides of the green tire 12. The example of FIGS. 17A & 17B shows a pumping tube of 180 degrees in one chafer strips only (e.g., 70). In FIG. 17B, it will be noted that the normal chafer strip 126 is configured to complement the construction of the chafer strip 70 with the holes 100, 102. The circular holes 100, 102 may be at opposite ends of the complementary strip 126. When abutted against the chafer strip 70, the holes 100, 102, create 180 degree opposite cavities 132, 134, as seen in FIG. 18.

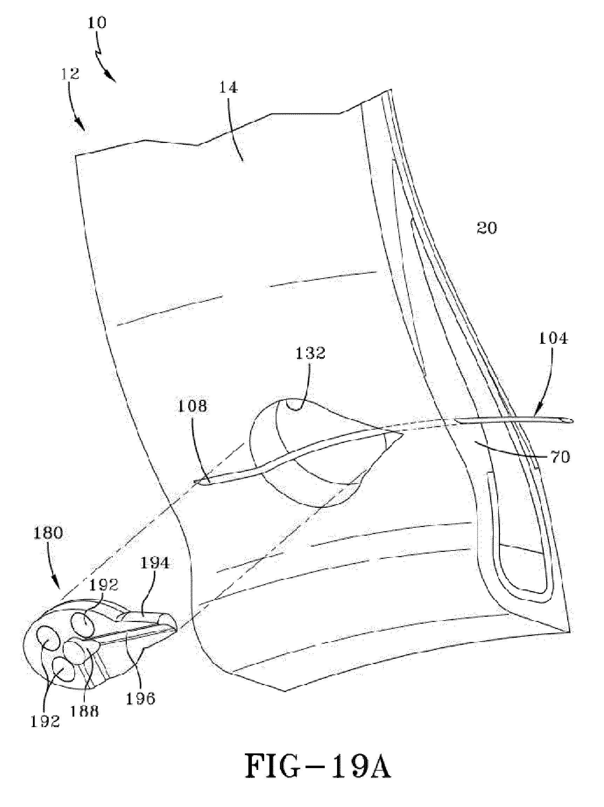

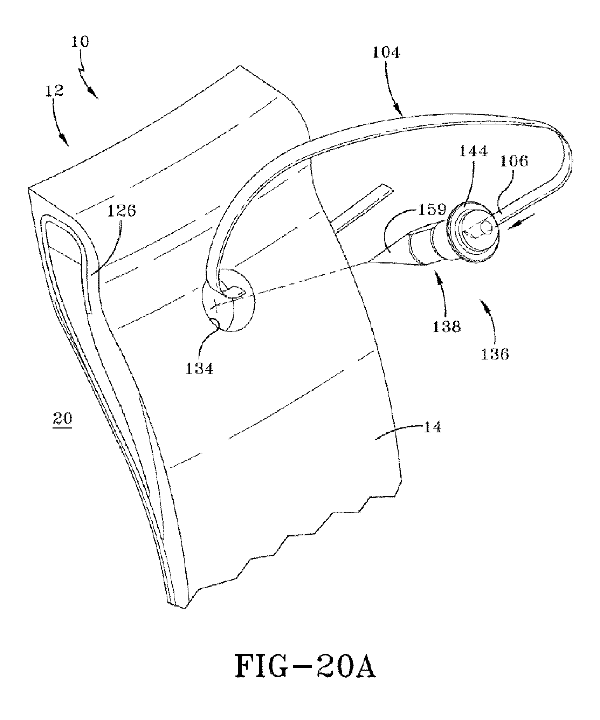

The end 106 of the silicone strip assembly 104 will hereafter be referred to as the "outlet end portion" extending through the outlet cavity 134 and the end 108 hereafter referred to as the "inlet end portion" of the silicone strip assembly extending through the inlet cavity 132. FIG. 18 illustrates the 180 degree extension of the silicone strip assembly 104 and FIGS. 19A - 19E, show the relative location of the silicone strip assembly 104 to the tire bead and apex components 22, 26. FIG. 19A shows the inlet cavity 132 and silicone core assembly 104 ready for placement of an inlet core device and FIG. 20A shows the outlet cavity 134 ready for placement of an outlet core device.

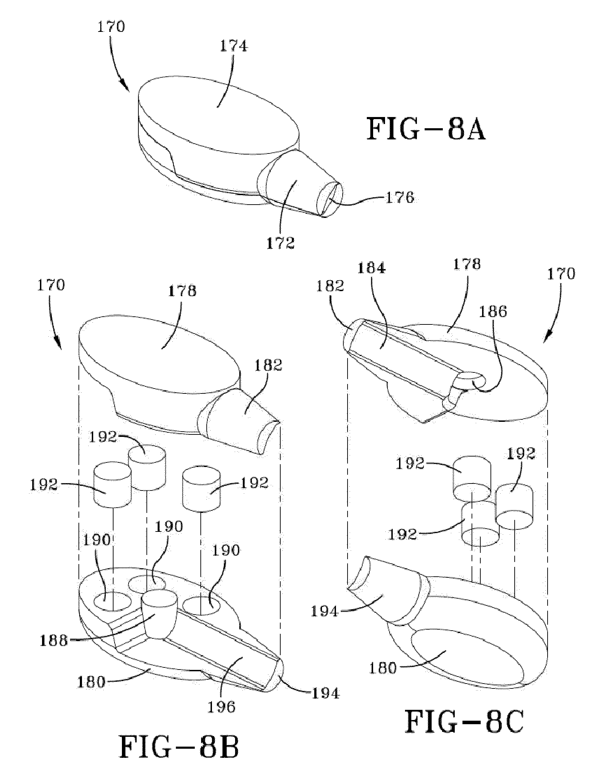

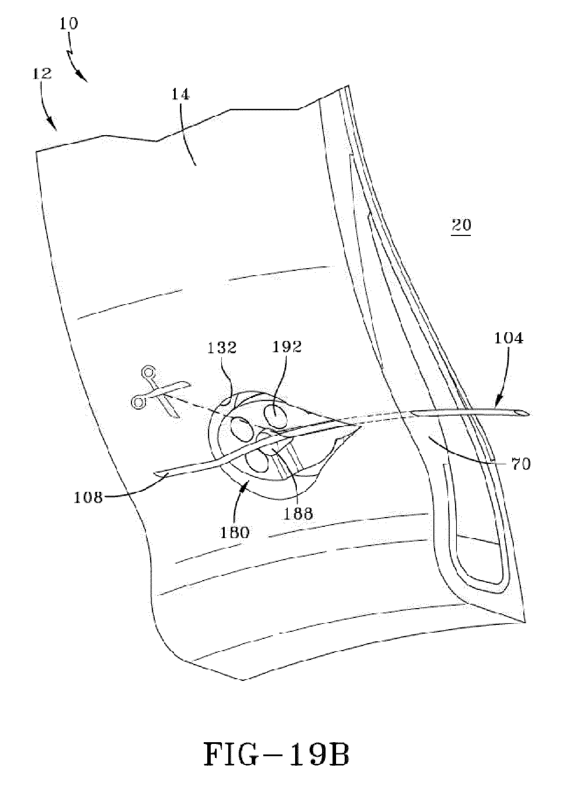

FIGS. 19A - 19E represent sequential views showing the installation of an inlet core assembly 170 of FIGS. 8A - 8C linking the silicone strip assembly 104 with the green tire after the build and the curing of the green tire. The inlet core assembly 170 may be constructed of any suitable metal. In FIG. 19A, a bottom half housing 180 is inserted into the inlet cavity 132 after the inlet cavity has been enlarged by a cutting implement into a generally pointed shape (shown) or key shaped (not shown) as indicated by the scissor representation. The cutting implement opens the chafer strip groove, still occupied by silicone strip assembly 104, to accommodate receipt of the conical half-protrusion 194 of the bottom half-housing 180. The tapered end of the conical half-protrusion 194 fits into the chafer channel occupied by the strip assembly 104, as shown in FIG. 19B, as the strip assembly is positioned within a half-channel 196 extending across the bottom half-housing 180 and conical half-protrusion. The extra length of inlet end portion 108 of the strip assembly 104 may be cut and removed thereby positioning a terminal end of the strip assembly 104 within the half-channel 196 of the bottom half-housing 180.

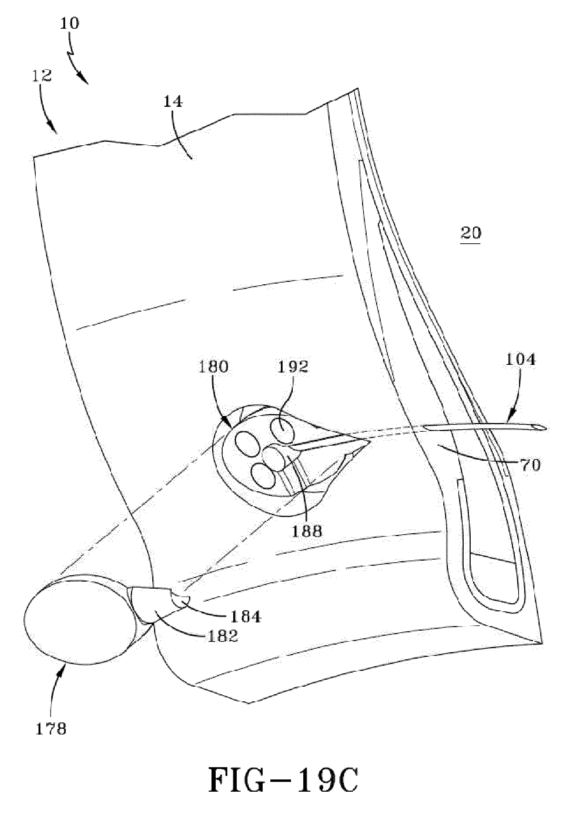

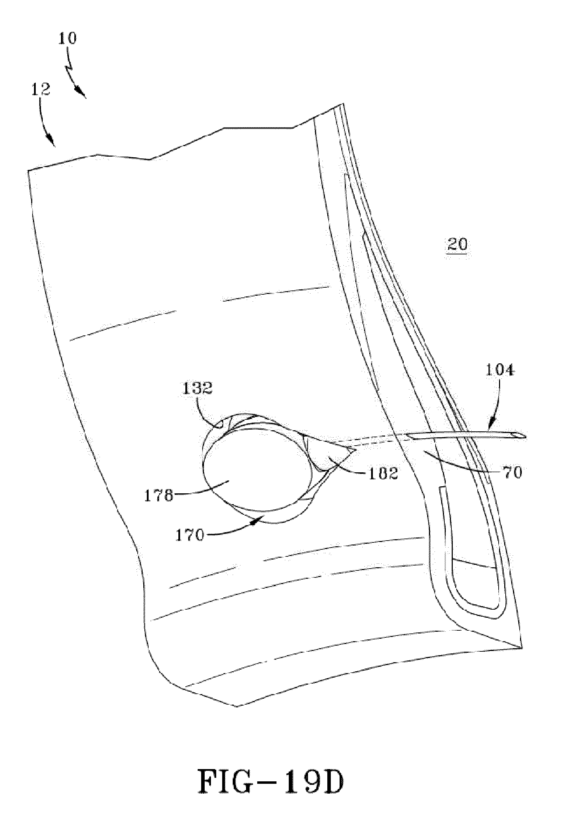

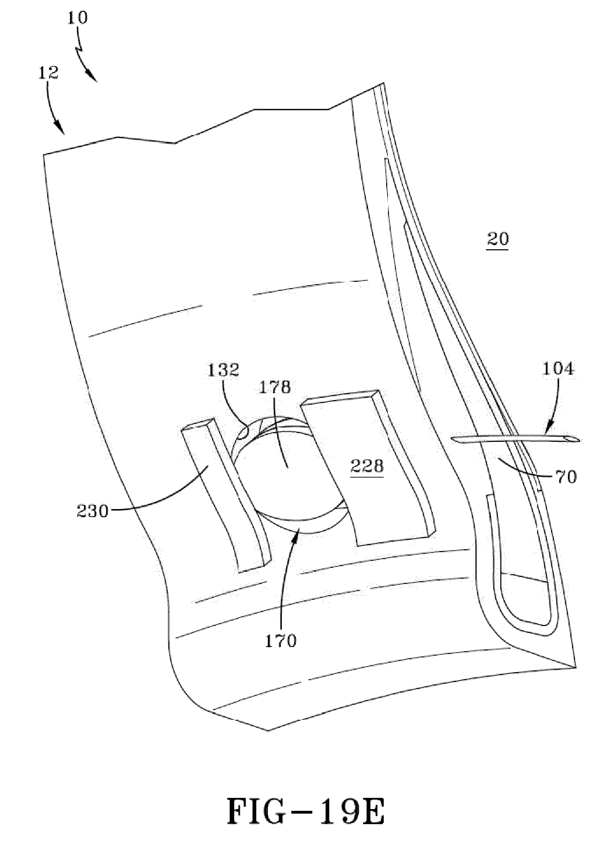

An upper/outer top half-housing 178 is attached to the bottom half-housing 180, as seen in FIGS. 19C & 19D, thereby capturing the strip assembly 104 within the full channel formed by upper and lower half-channels 184, 196. Magnets 192 may secure the metallic half-housings 178, 180 together. Rubber patches 228, 230, as seen in FIG. 19E, may be applied over the inlet core assembly 170 to temporarily secure the assembly in place for curing of the green tire 12. The patches 228, 230 are removed from the cured tire 12 so that the inlet core assembly 170 may operate in an unimpeded manner.

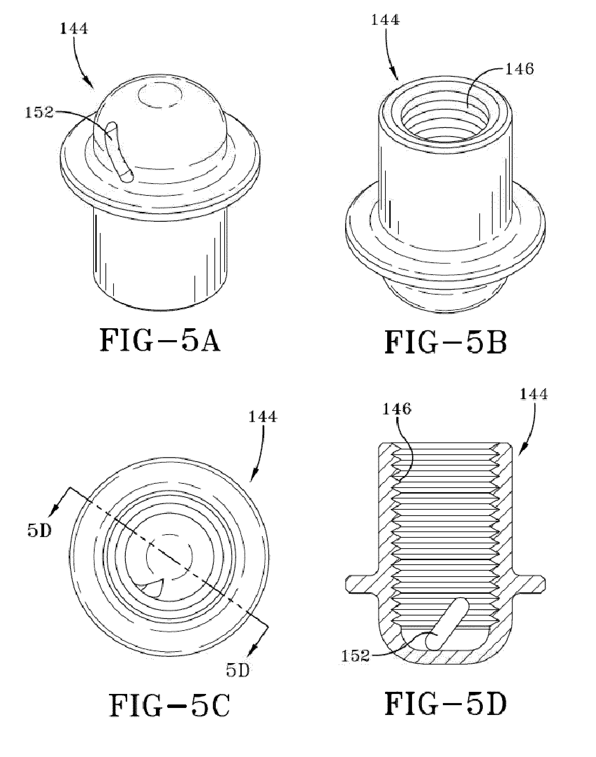

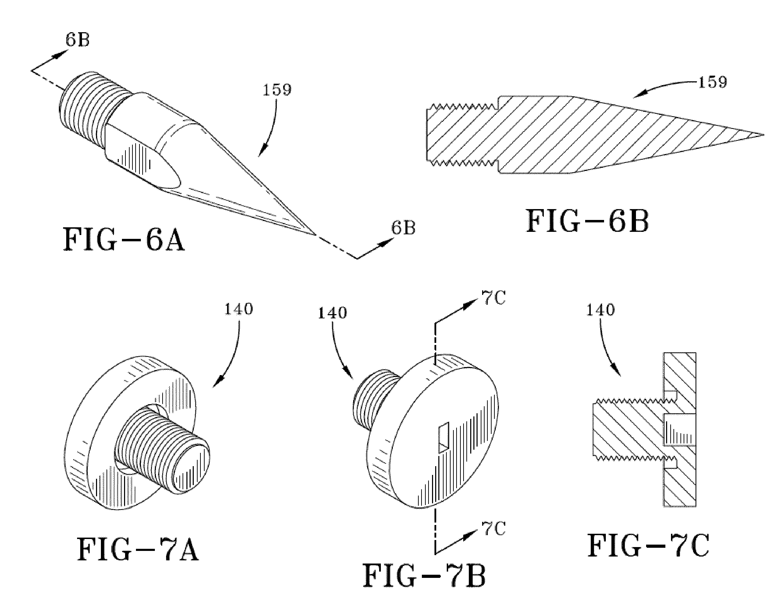

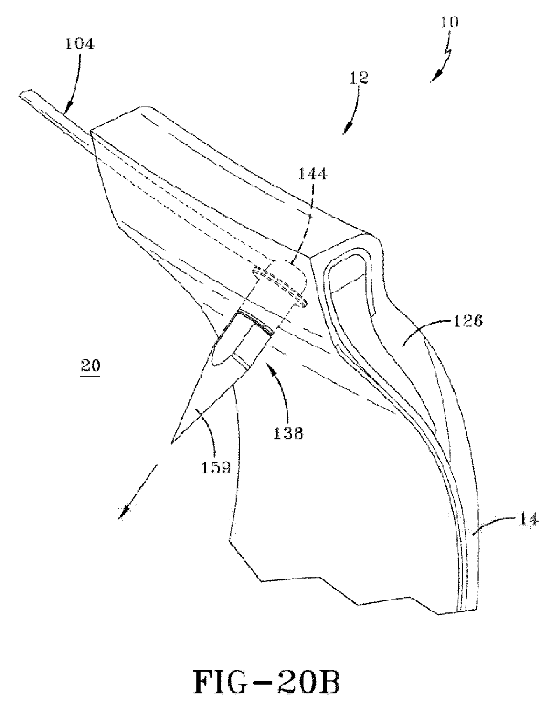

In accordance with the present invention, FIGS. 20A - 20E represent sequential views showing the installation of a metallic permanent outlet core assembly 136 of FIGS. 5A - 7C linking the silicone strip assembly 104 with the green tire after the build and the curing of the green tire. The metallic permanent outlet core assembly 136 may be constructed of steel, stainless steel, titanium, aluminum, and/or other suitable metal. In FIG. 20A, a metallic outlet housing 144 is inserted into the circular outlet cavity 134, and secured to, the end portion 106 of the silicone strip assembly 104. A screw punch 138, threadedly secured to the outlet housing 144, is pushed through to protrude through an inner tire wall into the tire cavity 20 from the outlet cavity 134, as seen in FIG. 20B. FIG. 20B further shows the outlet housing 144 fully seated into the outlet cavity 134 with the tapered conical half-protrusion 159 projecting into the tire cavity 20. The strip assembly 104 has been inserted into a slot 152 in the outlet housing 144.

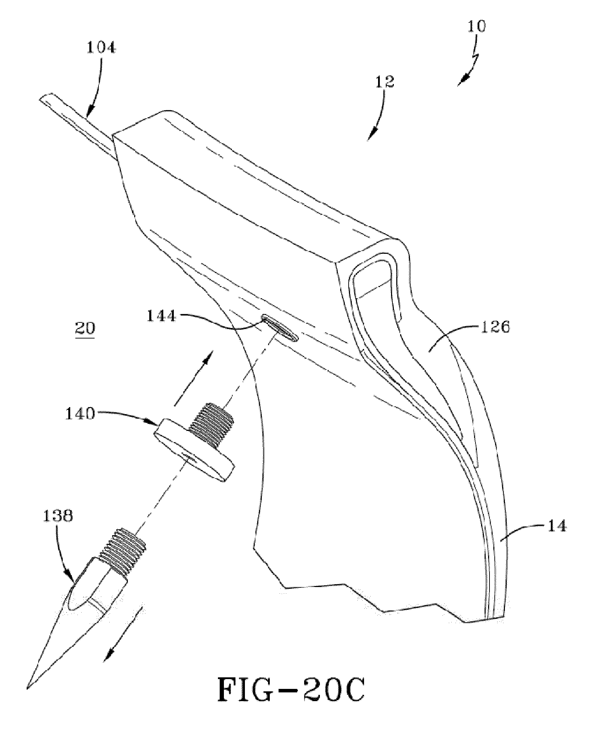

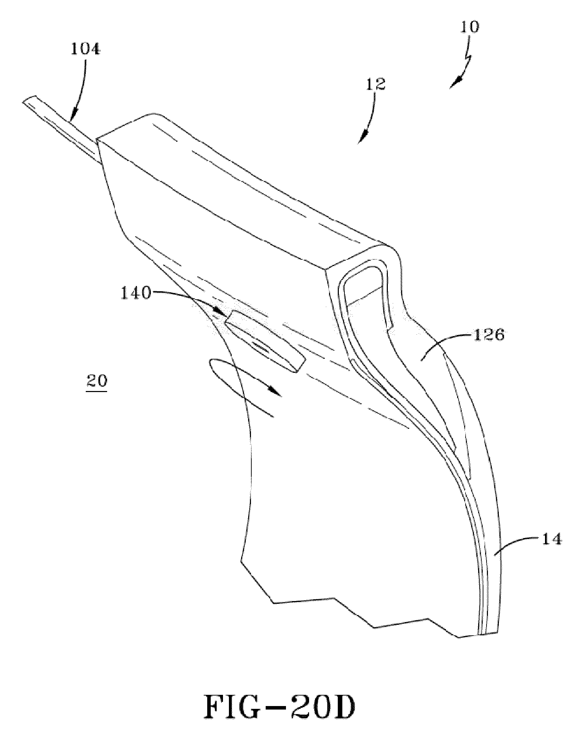

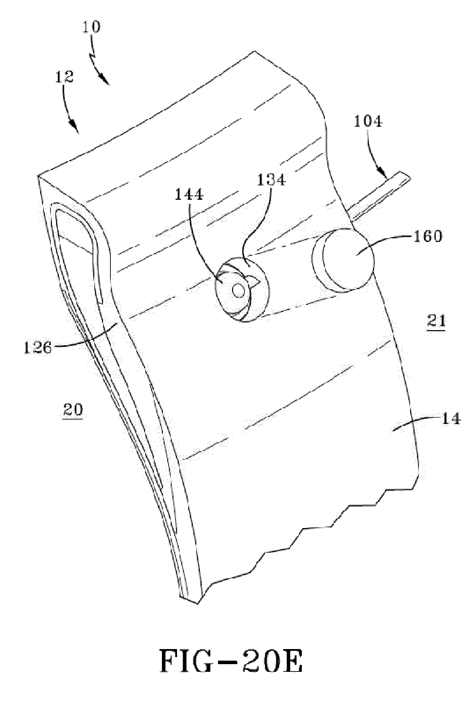

In FIGS. 20C & 20D, the screw punch 138 has been removed and replaced by a threaded valve 140 attached to a screw thread 146 of the outlet housing 144. In FIG. 20E, an uncured circular disk 160 of material similar to the uncured material of the chafer 70 may be fitted into the circular outlet cavity 134 thereby sealing the already inserted outlet housing 144. During curing, the disk 160 will permanently bond to the perimeter of the outlet cavity 134 and provide a pneumatic seal for preventing air travel from the tire cavity 20 through the outlet cavity to atmosphere 21.

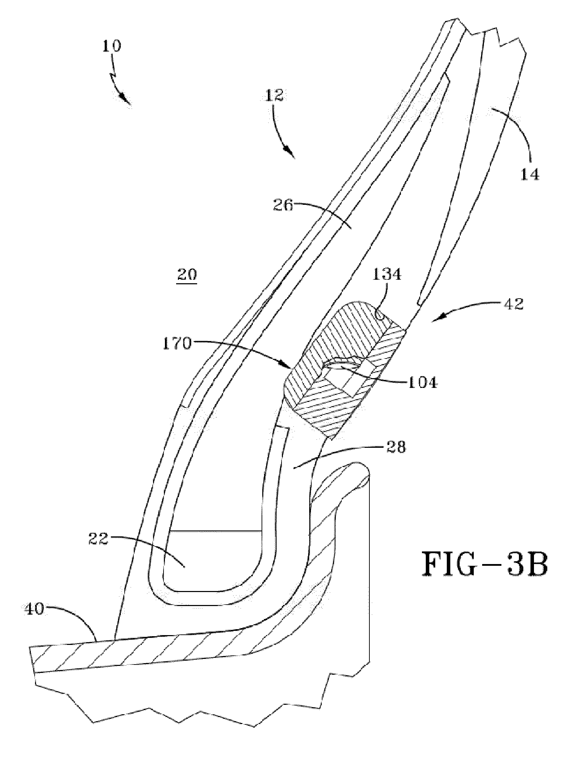

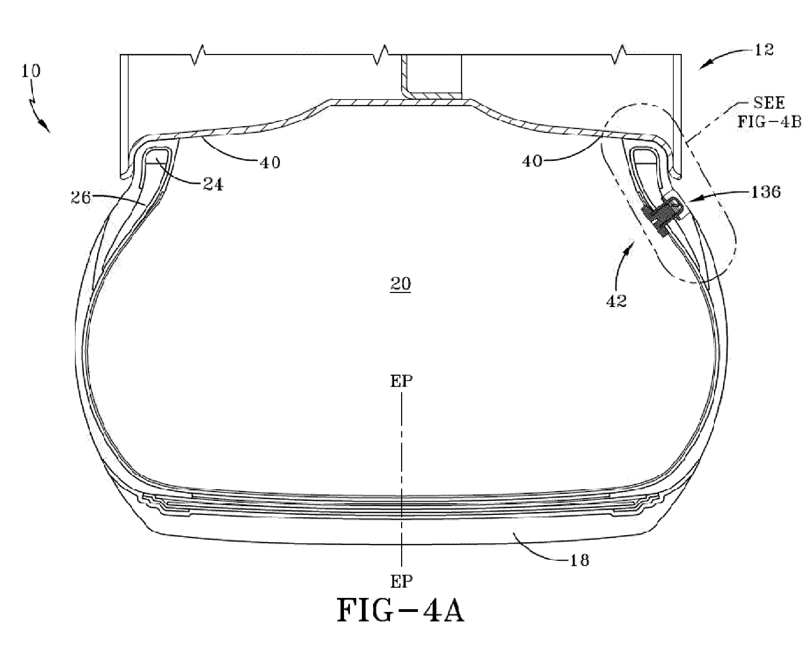

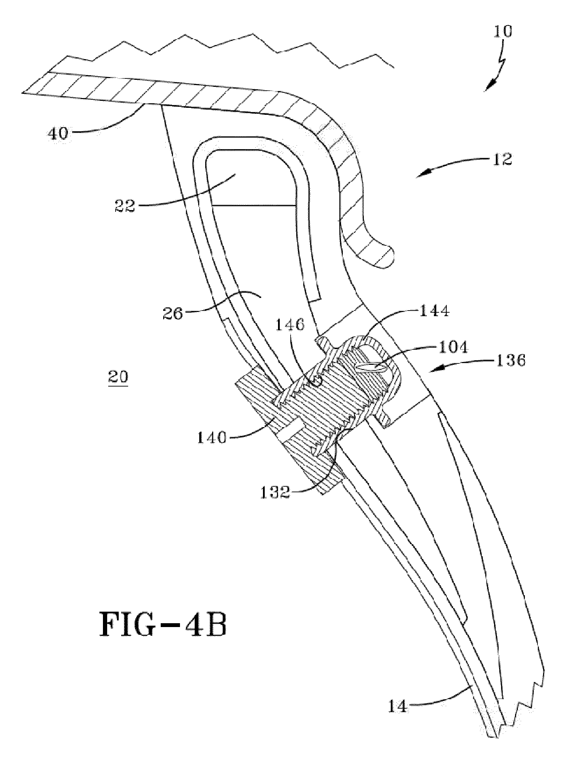

FIGS. 3A, 3B, 4A, and & 4B show the tire 12 with the inlet and outlet assemblies 136, 170 in place. The silicone core assembly 104 is enclosed/encased within the chafer component 28 of the green tire 12 and extends 180 degrees between the outlet core assembly 136 and the inlet core assembly 170. FIG. 3B shows an enlarged detail of the inlet core location and FIG. 4B shows an enlarged detail the outlet core location. The silicone core assembly 104 resides enclosed within a chafer channel 105 thereby preserving the structural integrity of the chafer channel throughout the curing of the tire 12. The sectional configuration of the silicone core assembly 104 is complementary to chafer channel 105 and surrounded by chafer composition thereby maintaining the configuration of the chafer channel throughout tire cure (FIG. 16C).

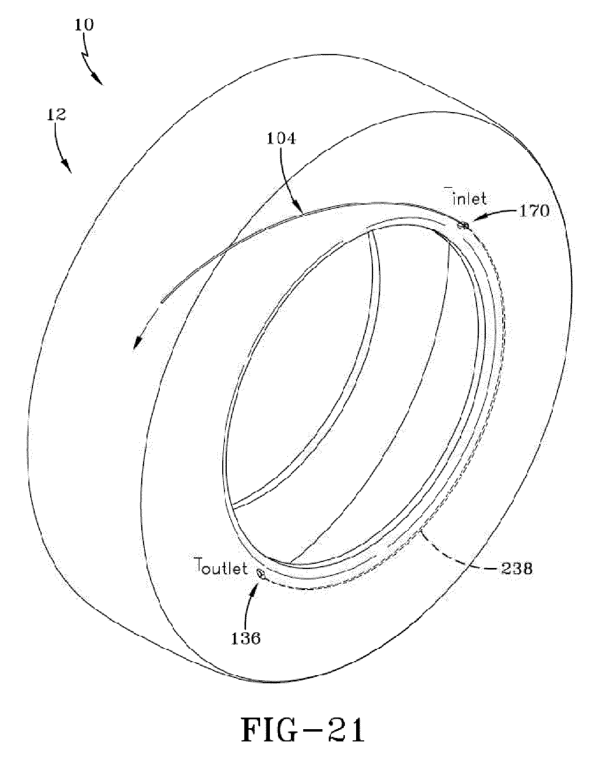

As described above, the air maintenance assembly 42 represents a peristaltic air pump system in which the compressible air passageway 238 progressively pumps air along the passageway from the inlet cavity 132 to the outlet cavity 134 and the tire cavity 20 for maintaining internal tire cavity pressure at a required level. The inlet assembly 170 and the metallic permanent outlet assembly 136 are preferably positioned generally 180 degrees apart, separated by the internal chafer air passageway 238 (FIG. 21). The tire 12 may rotate in a direction of rotation and cause a footprint to be formed against the contact/ground surface. A compressive force is directed into the tire 12 from the footprint and acts to flatten a segment of the air passageway 238 adjacent the footprint. Flattening of the segment of the passageway 238 forces air from the segment along the internal passageway 238 in a direction toward the permanent outlet assembly 136.

As the tire 12 continues to rotate, the air passageway 238 within the chafer component 28 is sequentially flattened/squeezed adjacent the tire footprint in a segment by segment direction opposite to the direction of tire rotation. The sequential flattening of the air passageway 238 segment by segment thus causes evacuated air from the flattened segments to be pumped to the permanent outlet assembly 136. When the air flow pressure is sufficient against the permanent outlet assembly 136, the outlet assembly opens to allow air to flow through the outlet assembly into the tire cavity 20. This air thereby serves to re-inflate the tire 12 to a desired pressure level as needed.

With the tire 12 continuing to rotate, flattened tube segments are sequentially refilled by air flowing into the inlet assembly 170 along the passageway 238. The inflow of air from the inlet assembly 170 continues until the outlet assembly 136 becomes adjacent the tire footprint. When the tire 12 rotates further, the inlet assembly 170 will eventually pass the tire footprint against ground surface, and airflow resumes to the outlet assembly 136 along the passageway 238.

The above-described cycle is then repeated for each tire revolution, half of each rotation resulting in pumped air going to the tire cavity 20 and half of the rotation resulting in pumped air being directed back out the inlet assembly 170. It will be appreciated that the subject tire assembly and its peristaltic pump assembly 42 preferably function in like manner in either direction of rotation. The peristaltic pump assembly 42 is accordingly preferably bidirectional and equally functional with the assembly moving in a forward or an opposite, reverse direction of rotation.

The location of the assembly 42 is in the chafer component 28 with the air passageway 238 thereby being in a high flex region of the tire 12 causing the flattening pressure from the tire rolling against ground surface to be applied to the passageway. The air maintenance passageway 238 is integrated into and enclosed by the chafer tire component 28 to prevent air leakage that would otherwise degradate the operational efficiency of the pump assembly 42. Other tire components may have high-flex regions and may alternatively be employed for location of the air maintenance assembly 42. For example, without intent to delimit such alternative components and locations, the assembly 42 may be incorporated at a more radially outward location in the tire sidewall 14. The passageway 238 could, in similar manner to that described previously, be deployed within a sidewall ply component during green tire build.

Pursuant to the foregoing, it will be appreciated that a method of constructing a tire 12 having an associate air maintenance pumping assembly 42 results in the tire. The method may include: constructing an elongate strip core 58; encasing the strip core 58 into a containment within an uncured flexible tire component (preferably but not necessarily chafer strip 70), the strip core extending between an air inlet cavity 132 and an air outlet cavity 134 in the flexible tire component; building on a tire building drum 116 a green tire carcass from tire components including the flexible tire component and encased strip core 58; inserting an air inlet assembly 170 into the inlet cavity 132 and an air outlet assembly 136 into the outlet cavity 134; curing the green tire carcass into a cured finished tire 12 including the flexible tire component 70 containing the strip core 58; and removing the encased strip core 58 from the cured flexible tire component to leave within the flexible tire component an unobstructed air passageway 238 interconnecting the assemblies 136, 170.

It may be further appreciated that the strip core 58 may be longitudinally removed by a free end from the cured flexible tire component, chafer strip 70, generally tangential to the tire carcass, by means of drawing on the free end 108 of the strip core and extending the outlet assembly 136 inward through a tire sidewall 14 by means of utilization of the punch 138 into communication with the tire cavity 20. The method may further include inserting an air inlet assembly 170 into the inlet cavity 132 prior to curing the green tire carcass; and inserting an air outlet assembly 136 into the outlet cavity 134 prior to curing the green tire carcass. The assemblies 136, 170 at the inlet and outlet positions serve to further seat the assemblies within the tire 12 during the tire cure.

The method may also include encasing the strip core 104 into a containment within the uncured flexible tire component by extruding a channel or tube into the uncured flexible tire component (chafer strip 70) defined by channel sidewalls 82, 84 and a channel bottom wall 86; inserting the strip core 104 into the channel; and collapsing a flexible channel sidewall or flap 114 to enclose the sidewall 82 over the strip core 104. The uncured flexible tire component may be a tire chafer component, but other alternative tire components may be substituted so long as the tire components exhibit sufficiently high flexure during tire rotation under load to progressively collapse the air passageway 238 in a rolling tire footprint.

It may further be appreciated that the assemblies 136, 170 at the inlet and outlet cavities 132, 134 provide a connector system that is flexible and multi-purpose. In the air maintenance tire and connector system 42 thus provided, the elongate integral air passageway 238 is formed by the silicone strip assembly 104 at the pre-cure tire build stage and by the vacated air passageway post-cure removal of the assembly 104 in a post-cure procedure.

The chafer component strip 70, as may be appreciated from FIGS. 12-17, represents a flexible tire component strip forming a portion of the tire 12. The tire component strip in the form of the chafer strip 70 may provide: the channel 90 within an upper surface defined by opposed strip lip portions 82, 84 and a channel bottom wall 86; and the air passageway 238 formed within the flexible chafer tire component 70 extending between the inlet cavity 132 and the outlet cavity 134 in at least a partial circumferential (e.g., 180 degree) path around the tire 12. The elongate passageway-shaping strip assembly 104 may occupy and form the air passageway 238 of the flexible chafer tire component 70 during green tire build and tire cure. The passageway-shaping, silicone strip assembly 104 may be operative to form and maintain the air passageway 238 to a desired cross-sectional configuration which may duplicate the cross-sectional configuration of the silicone strip assembly 104.

The passageway-shaping, silicone strip assembly 104 may be removable from the air passageway 238 in a post-cure procedure. The free end portions 106. 108 may be accessible at the inlet and outlet cavities 132, 134, respectively, and inlet and outlet assemblies 170, 136, respectively, whereby the silicone strip assembly 104 may be removed by an axial withdrawal force application to one of the free end portions 106, 108 of the silicone strip assembly 104.

In FIGS. 11 and 16A - 16C, the passageway-shaping strip assembly 104 may have a generally elliptical cross-sectional configuration and may be configured with a silicone core 58 encased by a sheath 92 composed of a release material such as a rubber composition. The flexible chafer tire component 70 may increase side-to side (the axial direction of the tire 12) in sectional thickness from the radially outward region 72 to the radially inward region 88. The channel 90, which may become the air passageway 238, may reside within the radially inward, thicker region 88. The channel 90 may be formed to extend into the radially inward region 88, angling radially inward toward the radially outward region 72, as shown in FIGS. 16A -16C at an angle θ within an exemplary range between -20 to +20 degrees.

With reference to FIG. 21, a method of extracting the elongate strip assembly 104 from the air passageway 238 defined by the assembly may occur in a post-cure procedure. The assembly 104 may be extracted longitudinally from occupancy within the flexible tire component (chafer 28), thereby defining the air passageway 238 within the chafer component by the space previously occupied by the elongate strip assembly 104. The elongate strip free end portion 108 may be accessible at the inlet cavity 132 and inlet assembly 170 and the free end portion 106 at the outlet cavity 134 and outlet assembly 136. The elongate strip assembly 104 may be moved and extracted tangentially end to end relative to the tire 12 from the inlet cavity 132 by a withdrawal force applied to the elongate strip free end 108. Alternatively, the assembly 104 may be extracted from the outlet opening 134 by means of the free end 106. Application of the withdrawal force may be in the form of a tensile force applied to the free end portion 108 of the elongate strip assembly 104 alone or in conjunction with other extraction techniques. For example and without restriction, an extraction pneumatic system (not shown) may be deployed to push the assembly 104 from the air passageway 238. The pneumatic system may include an air blow gun on to which a nozzle is attached.

## Claims

1. A pneumatic tire having a toroidal tire cavity (20) for containing pressurized air and an elongate integral air passageway (238) contained within a flexible tire component, the air passageway (238) extending between an air inlet cavity (132) and an air outlet cavity (134) in the flexible tire component, the air passageway (238) extending for at least a partial circumferential path around the tire (12), and a metallic connector assembly (136) within the air outlet cavity (134), the connector assembly (136) including a through-channel for conducting air flow communication between the air passageway (238) within the flexible tire component and a chamber of the metallic connector assembly (136).

2. The tire of claim 1 wherein the flexible tire component comprises a chafer component (28) of the tire (12).

3. The tire of claim 1 or 2 wherein the connector assembly (136) includes a valve device for regulating a flow of air from the air inlet cavity (132) to the tire cavity (20).

4. The tire of at least one of the previous claims further comprising an elongate core strip (98) positioned within the air passageway (238) of the tire flexible component, the through-channel of the connector assembly (136) having a cross-sectional configuration to receive a free end of the core strip (98) therethrough.

5. The tire of claim 4 wherein the through-channel comprises a through-slit.

6. The tire of at least one of the previous claims wherein an inlet connector assembly within the air inlet cavity (132) includes an air inlet device for conducting air external to the tire (12) into the air inlet cavity (132) and the metallic outlet connector assembly (136) within the air outlet cavity (134) includes a valve device for regulating a flow of air from the air outlet cavity (134) to the tire cavity (20).

7. The tire of claim 4, 5 or 6 wherein the elongate core strip is a removable elongate core strip (98) which can be positioned within the air passageway (238) of the flexible tire component during a pre-cure build of the tire (12) and which can be withdrawn from the air passageway (238) after curing the tire (12).

8. The tire of claim 7 wherein a through-channel of both the inlet connector assembly and the outlet connector assembly each has a cross-sectional configuration to receive a respective free end of the core strip (98) therethrough.

9. The tire of claim 8 wherein each through-channel comprises a through-slit.

10. The tire of at least one of the previous claims wherein the metallic connector assembly (136) is constructed of steel, titanium, aluminum, stainless steel, stainless steel and titanium, stainless steel and aluminum, titanium and aluminum or stainless steel, aluminum, and titanium.

11. The tire of at least one of the previous claims wherein the tire (12) is a self-inflating tire.

12. The tire of at least one of the previous claims wherein the tire (12) comprises an air maintenance assembly (42).
